# EUROPEAN PATENT APPLICATION

(11) **EP 4 707 416 A1**
(43) Date of publication of application: **11.03.2026**
(21) Application number: 24198686.8
(22) Date of filing: 05.09.2024
(51) Int. Cl.: C22C 21/00, C22F 1/04, H01M 4/66, H01M 4/75

(54) **BATTERY FOIL**

(71) Applicant: Constantia Teich GmbH, 3205 Weinburg (AT)
(72) Inventor: Hofinger, Matthias, 3002 Purkersdorf (AT); Honaramooz, Mohammad Taha, 1070 Wien (AT); Kornfeld, Martin, 3400 Klosterneuburg (AT)
(74) Representative: Patentanwälte Barger, Piso & Partner

(57) **Abstract**

The invention relates to a battery foil (current collector) comprising an aluminum alloy, with the following composition:
Si: 0.1 - 0.2wt-%,
Fe: ≤ 0.6wt-%,
Cu: 0.1 - 0.2wt-%,
Mn: 0.03 - 0.05wt-%,
Mg: 0.0 - 0.05wt-%
Zn: 0.0-0.1wt-%
Ti: 0.0 - 0.05wt-%,
with 3-4 times as much Fe as Si,
with at least 4 times as much Cu as Ti,
wherein the aluminum alloy may have impurities of Cd with a max 20ppm, Pb with a max 100ppm and Hg with a max 5ppm, the sum of Pb, Hg, Cd and CrVI being ≤100ppm, the others (not mentioned) individually <0.05 wt-% and the sum of the others ≤0.15 wt-%, with the rest of the alloy being Al,
and, wherein the battery cathode foil has intermetallic phases having an average diameter length of 0.5µm or more and their number density being on average 1.3×10⁴particles/mm² or more.

## Description

The invention relates to a battery foil, a thin aluminum foil used as a current collector in batteries, in particular for high-temperature applications, according to claim 1.

Improving the mechanical properties of battery components has always been a priority. The increasing use of batteries in electric vehicles has given these properties even greater importance in recent years. Numerous attempts have been made to improve the mechanical properties of thin aluminum foils, and there are numerous patents in this area.

Since the operating temperature of batteries can be as high as 60-70°C, and this temperature range is increasing due to the growing demand for fast charge and super-fast charge batteries where the current collectors are more often exposed to high temperatures, there is an increasing emphasis on how well the mechanical properties of the batteries perform at high temperatures. As the cathode current collector foil is a safety critical component of the battery, it is critical to have high mechanical properties not only at room temperature, but also at these elevated operating temperatures. For example there currently are market requirements for racing car batteries, which means that battery components must be thermally stable, as racing cars sometimes operate under extremely high loads and temperatures.

This begins during the manufacturing process of today's LFP or NMC lithium-ion batteries (LIBs), where the active material is applied as slurry with NMP (N-methyl-2-pyrrolidone) as a solvent to wet the current collector foil. This solvent must be removed by evaporation by heating the foil to high temperatures. Directly in-line after this heating step, the active material is compressed onto the current collector foil by a calendaring process. The cathode current collector foil must be able to withstand these high forces at elevated temperatures in order to avoid plastic deformation and wrinkles at the coil edges or even breakage during rewinding and further production.

WO 2019/101723 shows an aluminum foil that is suitable as an electrode foil in a battery, but has a very low tensile strength and poor thermal stability, which can lead to problems in battery production, resulting in production interruptions and high costs.

WO 2019/101730 also shows an aluminum foil that is suitable as an electrode foil in a battery. However, this battery foil also has unsatisfactory long-term thermal stability.

JP 6775335 B2 mentions that the tensile strength of the aluminum foil is 261MPa or more. However, the high Mn content results in very low electrical conductivity, which in turn leads to thermal runaway and an increase in battery temperature. In addition, the tensile strength of 261MPa was achieved after cold rolling in which the entire thickness reduction is 98.3% or more.

CN 116706080 A discloses a thin aluminum foil (<= 13µm) with a tensile strength of 265~270MPa. However, the patent nowhere mentions specific chemical compositions. In addition, the patent requires an intermediate annealing step during foil production, which is neither sustainable nor cost-effective.

CN 105658826 B discloses an aluminum foil with a tensile strength of 220MPa or more and an electrical conductivity of over 50% IACS. However, the tensile strength should be higher than 220MPa to avoid wrinkles and cracks during battery cell production.

Therefore, current collector foils that can withstand high temperatures without compromising their mechanical properties at high temperatures are required.

According to the invention, this is achieved by a thin aluminum foil made of an aluminum alloy to be used as a current collector (cathode current collector, battery foil) in batteries according to claim 1 of the invention. In other words, the present invention has a specific chemical composition with, in wt-%, Si between 0.1-0.2 and Fe ≤0.6, with 3-4 times as much iron as silicon in the alloy, Cu between 0.1 and 0.2, Mn between 0.03 and 0.05, Mg between 0.00 and 0.05, Ti between 0.00 and 0.05, with at least 4 times as much copper as titan in the alloy, Zn between 0.0 and 0.1, furthermore Cd with a max 20ppm, Pb with a max 100ppm and Hg with a max 5ppm, the sum of Pb, Hg, Cd and CrVI are ≤100ppm, the others (not mentioned) individually <0.05 and the sum of the others ≤0.15wt-%, the rest being Al, and a specific rolling process of hot rolling, cold rolling at room temperature and foil rolling at room temperature, without any intermediate annealing during the cold rolling and foil rolling processes until the final thickness is achieved, and with a 40-60% reduction per pass during the cold rolling at room temperature and foil rolling at room temperature without any intermediate and final annealing, which results in the thermal stability of the aluminum collectors (UTS: 245-275 MPa and elongation: 2.5-4.6%), while maintaining the electrical conductivity. In this way, the chemical composition of the aluminum alloy and the size and number density of the intermetallics are appropriately controlled to provide a thin gauge aluminum foil with high-temperature mechanical properties and high electrical conductivity suitable for the use as a current collector in energy storage devices such as batteries.

To achieve the desired mechanical and electrical properties, several tests were performed. After long testing procedures the present formulation of the aluminum alloy was found to be suitable for the desired task. The reason for this specific selection was the following:
Iron (Fe) as an alloying element was chosen to increase the strength of the aluminum alloy through solid solution and intermetallic formation of Al-Fe and Al-Fe-Si intermetallics. It is added at a maximum of 0.6 wt-%. Above this amount, very large Al-Fe and/or Al-Fe-Si intermetallics are formed, resulting in problems such as pinholes during foil rolling, which cause web break during calendaring of the aluminum foil.

Silicon (Si) is added to the aluminum alloy to provide better castability, increased strength via the solid solution strengthening mechanism, and improved wear resistance. Its concentration in the alloy is 0.1-0.2wt-%, preferably 0.14-0.2wt-%, especially preferable 0.14-0.18wt-%. However, above 0.2wt-% results in the precipitation of large primary Si and/or Al-Fe-Si intermetallics, causes problems such as pinhole formation during foil rolling. On the other hand an alloy containing less than 0.1wt-% Si requires high purity aluminum, which is neither sustainable nor cost effective. There has to be 3-4 times as much iron as silicon in the alloy to ensure a suitable amount of Al-Fe and Al-Fe-Si intermetallics.

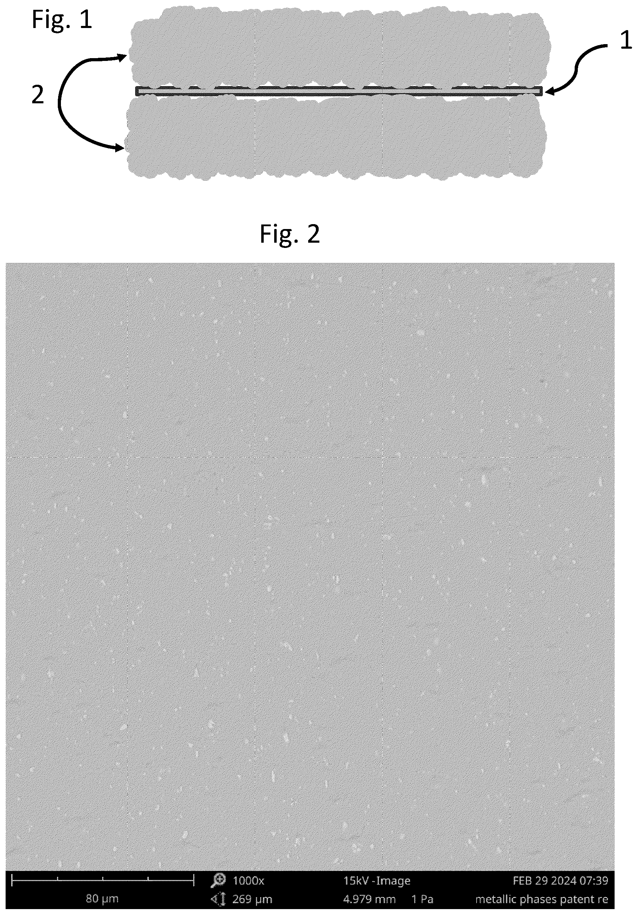

It is important to note that the formation of Al-Fe, Al-Fe-Si intermetallic particles in aluminum alloys is inevitable and does not have a negative effect on the mechanical properties of the aluminum alloy. This is especially true for high temperature applications, due to the high thermal stability of these intermetallics. However, it is important to control the size (nucleation and growth kinetics) and number density of the intermetallics by adjusting the chemical composition of the alloy to take advantage of their thermal stability and prevent pinhole formation and ductility reduction. Therefore, the average circle diameter of the intermetallics should be 0.5 or more, preferably 0.65µm or more and their number density should be 1.3 × 10⁴/mm² or more. These results were achieved by analyzing 30 SEM images at 1000 magnification (see table 6 and Fig. 2).

Copper (Cu) is added in the range of 0.1-0.2wt-%. Depending on the Cu content, tensile strength can be increased via precipitation strengthening or solid solution strengthening mechanisms. This amount of Cu results in an increase in tensile strength via solid solution strengthening, which inhibits dislocation motion by forming clusters. These clusters are coherent with the matrix and are sheared by the dislocations, thus increasing the strength. In addition, after shearing they regulate their orientation within the matrix, so they do not adversely affect the ductility, and consequently both strength and ductility increase. Since Clusters do not have a preferred orientation in the matrix, when the dislocations reach the clusters and apply stress on them, the clusters change their orientation so that the dislocations can pass through. This is the reason why ductility increases. However, the corrosion resistance is reduced when the Cu content is higher than 0.2 wt-%, on the other hand, when the amount of Cu is less than 0.1wt-%, it is not very effective in increasing the mechanical properties. Furthermore it is important to have at least 4 times as much Cu as Ti (Titan) in the alloy to ensure the desired technical properties.

Manganese (Mn) is essential for increasing the mechanical properties at high temperatures. This is due to the reduction of particle size achieving through the adding of Mn to the alloy. The alloy of the present invention contains 0.03 - 0.05wt-% of Mn. Since Mn in this composition window is in solid solution, a higher amount of Mn significantly reduces the electrical conductivity and less than 0.03wt-% does not affect the high temperature mechanical properties.

Finally, the alloy contains unavoidable impurities such as Mg, Zn, Cd, Pb, Hg and Cr. The combination of Cd, Pb, Hg and Cr is 100 ppm or less, and the total impurity content is 0.15% by weight or less.

Unless explicitly stated otherwise, percentages in this description are always given in wt-%.

The standard production route to manufacture aluminum foils consists of smelting, casting, homogenization, hot rolling, intermediate annealing, cold rolling, a second intermediate annealing and foil rolling with (or without) final annealing. However, in the present invention the desired properties will not be achieved if any intermediate annealing is applied. Therefore, all the intermediate annealing treatments which are usually applied during aluminum foil production must be eliminated. This was very surprising and counterintuitive. Furthermore there must not be a final annealing step under any circumstances since this leads to a reduction of both tensile strength and elongation. It was found that the special aluminum alloy of the invention in combination with this uncommon manufacturing routine of the aluminum foil gives the final product very unique mechanical properties which are not able to achieve otherwise for this alloy.

Table 1 shows an aluminum alloy according to the present invention (alloy A) in comparison to alloys known from the prior art (alloys B, C and D):

**Table 1: Chemical composition of the aluminum foils used as cathode current collector in wt-%**

| Alloy | Al | Fe | Si | Cu | Mg | Mn | Zn | Ti |
|---|---|---|---|---|---|---|---|---|
| A | Balance | 0.51 | 0.14 | 0.1 | 0.001 | 0.0306 | 0.003 | 0.025 |
| B | Balance | 0.54 | 0.13 | 0.06 | 0.001 | 0.017 | 0.003 | 0.025 |
| C | Balance | 1.08 | 0.11 | 0.01 | 0.01 | 0.02 | 0.01 | 0.04 |
| D | Balance | 0.54 | 0.14 | 0.002 | 0.001 | 0.009 | 0.003 | 0.027 |

In the process of manufacturing the positive electrode, after applying the active materials as wet slurry, the electrodes are heat-treated at relatively high temperatures of about 130°C in a so called drying process to remove the slurry solvents. However, due to the high temperature nature of the drying process, the mechanical properties of the aluminum foil will be reduced (see table 3 below), and since after this step the active material is compressed on the current collector through the calendaring process, the aluminum foil must withstand all these applied stresses and avoid any plastic deformation and breakage throughout the production chain. Drying processes usually lead to recovery phenomena where the thermally activated dislocations are annihilated and consequently the dislocation density is reduced. As a result, the tensile strength of the material decreases and elongation increases. However, in the case of a highly deformed aluminum foil (>95% total reduction), both strength and elongation are reduced after the heat treatment process due to a different dominant recovery mechanism called Tripple Junction Motion (TJM). This mechanism is activated by the movement of the triple junctions, which is the motion of the high angle grain boundaries. Thus, in order to maintain mechanical properties after heat treatments, the high angle grain boundaries must be pinned, and in order to hinder their movements, precipitates (in this case, intermetallics) with certain size and number densities are required. For this reason, the key to the mechanical properties and long-term thermal stability of the aluminum foil according to the invention is to use the exact alloy composition as described above, since only this composition can provide the required diameter and density of the intermetallic particles.

In the present invention there is, as already mentioned, no intermediate or final annealing step whatsoever. This is essential to achieve the tensile strength of the aluminum foil after final foil rolling at room temperature, which is 275MPa or higher in the rolling direction and 275MPa or higher in the transverse direction. Such mechanical properties are achieved if the mechanical properties of the foil stock, with the claimed composition, is 214MPa or higher before the further processing steps.

The aluminum alloys with the chemical compositions mentioned in the table 1 were cast, and then hot rolled, cold rolled and finally foil rolled without intermediate or final annealing, so that the final thickness of the aluminum foil is 20µm or less, preferably 15µm or less. In detail the process was as following:
1. Smelting and casting of the aluminum alloy, this step is known to the person skilled in the art,
2. Hot rolling of the aluminum alloy with temperatures of below 500°C,
3. Cold rolling at room temperature with a reduction in thickness per pass of 40% to 60%,
4. Foil rolling in between 4 and 6 steps at room temperature with a reduction in thickness per pass of 40% to 60%.

As already mentioned, there are no intermediate or final annealing processes involved in the production process.

For each of the aluminum alloy foil from the table 1, tensile strength was measured in rolling direction and transversal.

For an aluminum foil according to the present invention (alloy A), when the heat treatment in the form of a low temperature annealing is performed at 100 °C for 24 hours the tensile strength in the rolling direction is about 248MPa, at 90°C for 24 hours the tensile strength in the rolling direction is about 255MPa, at 80°C for 24 hours the tensile strength in the rolling direction is about 259MPa, at 70°C for 24 hours the tensile strength in the rolling direction is about 269MPa and at 60°C for 24 hours the tensile strength in the rolling direction is about 277MPa. This provides the cell and battery manufacturers with the possibility to use higher tension during their production. To perform the tensile strength tests at room temperature and after heat treatments, five samples with 15mm width are cut out from the foils and then they are fixed in the jaws of the tensile test machine with 50mm distance between the jaws. Then the tests are done with 20mm/min rate. Measurements for values are given in table 2 below:

**Table 2: Tensile strength of the aluminum foil (alloy A from table 1) after heat treatment for 24 hours**

| Temperature (°C) | UTS (MPa) | Standard deviation (UTS) |
|---|---|---|
| 25 | 280.43 | 1.57 |
| 60 | 276.66 | 2.74 |
| 70 | 269.35 | 1.7 |
| 80 | 259.49 | 1.95 |
| 90 | 255.92 | 0.49 |
| 100 | 247.73 | 1.62 |

While conducting tests on the present invention, in order to simulate the drying step in the battery cell production, which is an essential part of the production, the aluminum foils made of alloys A, B, C and D were heat treated at 80°C, 90°C, 100°C, 110°C, 120°C, 130°C, for 2 minutes. To perform the tensile strength tests at room temperature and after heat treatments, five samples with 15mm width are cut out from the foils and then they are fixed in the jaws of the tensile test machine with 50mm distance between the jaws. Then the tests are done with 20mm/min rate. As a result, it was found out that the tensile strength in the rolling direction of the samples of alloy A was at least 265MPa or higher as can be seen from table 3:

**Table 3: Tensile strength of the aluminum foils after heat treatment for 2 minutes**

| Alloy | Temperature (°C) | UTS (MPa) | Standard deviation (UTS) |
|---|---|---|---|
| A | 80 | 266.2 | 11.24 |
| A | 90 | 264.96 | 4.56 |
| A | 100 | 272.97 | 4.38 |
| A | 110 | 267.49 | 7.74 |
| A | 120 | 268.78 | 9.56 |
| A | 130 | 265.7 | 5.16 |
| B | 80 | 194.28 | 2.36 |
| B | 130 | 185.79 | 1.49 |
| C | 80 | 185.84 | 0.4 |
| C | 130 | 185.23 | 0.47 |
| D | 80 | 185.59 | 2.62 |
| D | 130 | 185.27 | 1.76 |

In contrast to alloy A the tensile strength in the rolling direction of the samples of alloys B-D never exceeded 195MPa (alloy B at 80°C), while most samples stayed around 185MPa. Taking into account only the highest temperatures, which resemble the drying process best, alloy A still exceeds 265MPa while on the other hand all of the other alloys exhibit tensile strengths of about 185MPa.

The operating temperature of lithium-ion batteries (LIBs) is usually up to 60-70°C. In other words, all battery components, including the current collectors, should be able to work up to these temperatures and not lose their mechanical properties over time. Therefore, the mechanical properties of the aluminum foils at high temperatures are important because they carry the active materials and any decohesion of the active materials from the aluminum foils or the fracture of the foils leads to the physical damage of the battery and technical problems.

Therefore tests were performed using alloy A of the present invention. The tensile strength of the aluminum foil in the rolling direction was measured after exposing the aluminum foil to 40°C, 45°C, 50°C, 55°C, 60°C, 65°C, and 70°C. To conduct the tensile strength tests at the elevated temperatures they were treated with for 30 seconds, five samples in each direction (rolling direction and transversal direction) with 15mm width are cut out from the foils. Then the heating chamber is installed in the tensile test machine and the chamber is heated up to the intended temperature. Afterwards, the samples are fixed in the jaws of the tensile test machine with 50mm distance between the jaws. Then the samples are kept at the temperature for 30 seconds, and finally do the tensile tests with 20mm/min rate. The results are reported in table 4 for rolling direction and table 5 for transversal direction:

**Table 4: Tensile strength and elongation of the aluminum foils at high temperatures in the rolling direction after staying at each temperature for 30 seconds**

| Alloy | Temperature (°C) | UTS (MPa) | Elongation (%) |
|---|---|---|---|
| A | 40 | 267.75 | 3.46 |
| A | 45 | 260.12 | 2.77 |
| A | 50 | 256.21 | 2.98 |
| A | 55 | 260.93 | 4.00 |
| A | 60 | 248.66 | 3.76 |
| A | 65 | 248.24 | 4.57 |
| A | 70 | 237.21 | 4.76 |
| B | 40 | 241.25 | 3.45 |
| B | 70 | 220.2 | 5.60 |
| C | 40 | 176.96 | 4.76 |
| C | 70 | 156.26 | 5.99 |
| D | 40 | 183.97 | 3.17 |
| D | 70 | 169.16 | 4.90 |

**Table 5: Tensile strength of the aluminum foils at high temperatures in the transverse direction after staying at each temperature for 30 seconds**

| Alloy | Temperature (°C) | UTS (MPa) | Elongation (%) |
|---|---|---|---|
| A | 40 | 267.18 | 3.62 |
| A | 45 | 265.83 | 3.89 |
| A | 50 | 261.55 | 4.29 |
| A | 55 | 260.97 | 5.50 |
| A | 60 | 251.97 | 4.36 |
| A | 65 | 249.87 | 5.58 |
| A | 70 | 244.02 | 6.21 |
| B | 40 | 239.8 | 4.33 |
| B | 70 | 219.31 | 5.76 |
| C | 40 | 179.44 | 4.50 |
| C | 70 | 156.4 | 5.07 |
| D | 40 | 187.89 | 2.44 |
| D | 70 | 174.55 | 2.76 |

Furthermore the electric conductivity for alloy A was measured without any previous heat treatment, which gave an IACS at room temperature of 50,56%.

The invention is briefly described below using Figures 1 and 2.

Fig. 1 shows a schematic of an aluminum current collector and applied active materials and Fig. 2 shows a SEM micrograph of alloy A showing intermetallic particles

Fig. 1 shows an aluminum foil 1 with active materials 2 applied on both surfaces of the aluminum foil 1. The aluminum foil 1 with active materials on both surfaces 2 is used as the electrode in batteries. Examples for active materials are NMC (Ni-Mn-Co) and LFP (Li-ferrophosphate).

Fig. 2 shows one example of a SEM micrograph of alloy A in which the intermetallic particles (white particles) have been distributed within the aluminum matrix (gray area).

To measure the size and number density of the mainly Al-Fe and Al-Fe-Si intermetallic particles, an aluminum foil was embedded in an epoxy resin. Then the foil was polished in 2 steps. In a first step the foil was polished with a 3µm diameter diamond suspension for 6 minutes. Then, the second polishing step was performed with a 0.5µm particle diameter OPS suspension for 2 minutes. The polished sample was examined via SEM (Thermo Fisher Phenom ProX tabletop SEM), where 30 pictures at 1000x magnification and 15KV acceleration voltage were taken. To obtain the number density of intermetallic phases, the pictures are processed via ImageJ 1.54d. The length of the scale bar in the SEM-pictures is used to calibrate the pixels to the length of the intermetallic phases. By using the particle analyze function of imageJ, the intermetallic particles are counted. The size and number density of the intermetallics are reported in table 6:

As can be seen in Fig. 2 and Table 6, due to the Si and Fe content the average circle diameter of the intermetallics is 0.65µm or smaller and their number density is 1.3×10⁴/mm² or higher. This is important in order to be effective in hindering the high angle grain boundary movements and as a result, to achieve and maintaining the mechanical properties after heat treatment.

Room temperature in this description is defined as always being 25 °C.

**Table 6. Average circle diameter and number density of the intermetallic particles within the aluminum foil (Alloy A).**

| Name | Intermetallic phases/mm² | average circle diameter [µm] |
|---|---|---|
| Intermetallic picture 1 | 28310 | 0.59 |
| Intermetallic picture 2 | 21211 | 0.63 |
| Intermetallic picture 3 | 23225 | 0.62 |
| Intermetallic picture 4 | 17042 | 0.64 |
| Intermetallic picture 5 | 20014 | 0.63 |
| Intermetallic picture 6 | 21676 | 0.63 |
| Intermetallic picture 7 | 21775 | 0.60 |
| Intermetallic picture 8 | 34775 | 0.57 |
| Intermetallic picture 9 | 30690 | 0.59 |
| Intermetallic picture 10 | 28817 | 0.59 |
| Intermetallic picture 11 | 21746 | 0.58 |
| Intermetallic picture 12 | 26296 | 0.57 |
| Intermetallic picture 13 | 19268 | 0.61 |
| Intermetallic picture 14 | 18521 | 0.61 |
| Intermetallic picture 15 | 22676 | 0.59 |
| Intermetallic picture 16 | 17155 | 0.61 |
| Intermetallic picture 17 | 18000 | 0.61 |
| Intermetallic picture 18 | 18197 | 0.63 |
| Intermetallic picture 19 | 20028 | 0.62 |
| Intermetallic picture 20 | 13662 | 0.65 |
| Intermetallic picture 21 | 13211 | 0.58 |
| Intermetallic picture 22 | 22352 | 0.59 |
| Intermetallic picture 23 | 21296 | 0.61 |
| Intermetallic picture 24 | 22099 | 0.57 |
| Intermetallic picture 25 | 24535 | 0.56 |
| Intermetallic picture 26 | 17873 | 0.63 |
| Intermetallic picture 27 | 18394 | 0.61 |
| Intermetallic picture 28 | 19634 | 0.62 |
| Intermetallic picture 29 | 20606 | 0.61 |
| Intermetallic picture 30 | 19239 | 0.61 |
| **average Ø** | **21411** | **0.61** |
| **standard deviation σ** | **4701** | **0.02** |

## Claims

1. Battery foil, comprising an aluminum alloy, wherein the aluminum alloy has the following composition:
Si: 0.1 - 0.2wt-%,
Fe: ≤ 0.6wt-%,
Cu: 0.1 - 0.2wt-%,
Mn: 0.03 - 0.05wt-%,
Mg: 0.0 - 0.05wt-%
Zn: 0.0-0. 1wt-%
Ti: 0.0 - 0.05wt-%,
wherein there has to be 3-4 times as much Fe as Si,
wherein there has to be ≥4 times as much Cu as Ti,
wherein the aluminum alloy may have impurities of Cd with a max 20ppm, Pb with a max 100ppm and Hg with a max 5ppm, the sum of Pb, Hg, Cd and CrVI being ≤100ppm, the others (not mentioned) individually <0.05 wt-% and the sum of the others ≤0.15 wt-%, with the rest of the alloy being Al,
and, wherein the battery cathode foil has intermetallic phases having an average diameter length of 0.5µm or more and their number density being on average 1.3×10⁴particles/mm² or more.

2. Battery cathode foil according to claim 1, wherein the Si content is 0.14 - 0.2wt-%, more preferably 0.14 - 0.18wt-%.

3. Battery cathode foil according to claim 1 or 2, wherein the battery cathode foil has intermetallic phases having an average diameter length of 0.65µm or more.

4. Battery cathode foil according to any of claims 1 to 3, wherein the battery cathode foil has a UTS at room temperature of at least 275MPa.

5. Battery cathode foil according to any of the preceding claims, wherein the battery cathode foil has a UTS at room temperature of at least 245MPa after a heat treatment of 100°C for 24 hours.

6. Battery cathode foil according to any of the preceding claims, wherein the battery cathode foil has a UTS at room temperature of at least 260MPa after a heat treatment of 130°C for 2 minutes.

7. Battery cathode foil according to any of the preceding claims, wherein the battery cathode foil has a tensile strength of at least 235 MPa in the rolling direction at 70°C after exposing the aluminum foil to 70°C for 30 seconds.

8. Battery cathode foil according to any of the preceding claims, wherein the battery cathode foil has a tensile strength of at least 240 MPa transverse to the rolling direction at 70°C after exposing the aluminum foil to 70°C for 30 seconds.

9. Battery cathode foil according to any of the preceding claims, wherein the battery cathode foil was produced be the process of
a) Smelting and casting of the aluminum alloy,
b) Hot rolling of the aluminum alloy with temperatures of below 500°C,
c) Cold rolling at room temperature with a reduction in thickness per pass of 40% to 60%,
d) Foil rolling in 4 to 6 steps at room temperature with a reduction in thickness per pass of 40% to 60%.

10. Production of a battery cathode foil according to one of the preceding claims consisting of
e) Smelting and casting of the aluminum alloy,
f) Hot rolling of the aluminum alloy with temperatures of below 500°C,
g) Cold rolling at room temperature with a reduction in thickness per pass of 40% to 60%,
h) Foil rolling in 4 to 6 steps at room temperature with a reduction in thickness per pass of 40% to 60%.

11. Use of a battery cathode foil according to any of the preceding claims for batteries suitable for battery electric vehicles (BEVs).
